# EUROPÄISCHE PATENTANMELDUNG

(11) **EP 1 788 056 A1**
(43) Veröffentlichungstag der Anmeldung: **23.05.2007**
(21) Anmeldenummer: 06023316.0
(22) Anmeldetag: 09.11.2006
(51) Int. Cl.: C09J 123/10, C09J 123/14, C08L 23/10, C08L 23/14

(54) **Verwendung von Polyolefinwachsen in Heissschmelzmassen**

(30) Priorität: 18.11.2005 DE 102005055018
(71) Anmelder: Clariant Produkte (Deutschland) GmbH, 65929 Frankfurt am Main (DE)
(72) Erfinder: Bach, Sebastijan, DI., 86462 Langweid (DE); Herrmann, Hans-Friedrich, Dr., 64521 Gross-Gerau (DE); Hohner, Gerd, Dr., 86368 Gersthofen (DE)
(74) Vertreter: Paczkowski, Marcus

(57) **Zusammenfassung**

Heißschmelzmassen der erfindungsgemäßen Art enthalten bis zu 40 Gew.-% eines oder mehrerer isotaktischer Homo- und/oder Copolymerwachse aus den Monomeren Ethylen und/oder Propylen und/oder höherer linearer oder verzweigter alpha-Olefine mit 4 bis 20 C-Atomen, die durch Polymerisation der entsprechenden Monomeren in Gegenwart von Metallocen als Katalysator hergestellt sind, und mindestens 60 Gew.-%, eines oder mehrerer amorpher, ataktischer Poly-alpha-Olefine. Heißschmelzmassen dieser Art eigenen sich zur Verwendung als Schmelzkleber.

## Beschreibung

Die Erfindung betrifft Heißschmelzmassen, basierend auf isotaktischen, niedrig-molekularen, niedrig-viskosen Homo- oder Copolymerwachsen und ataktischen Poly-alfa-Olefinen (= APAOs), wobei in den Heißschmelzmassen bis zu 40 Gew.-% an isotaktischem Homo- oder Copolymerwachs und mindestens 60 Gew.-% an ataktischem Poly-alfa-Olefin enthalten sind.

Heißschmelzmassen (hot melts) sind thermoplastische, bei Umgebungstemperatur feste Werkstoffe, die im schmelzflüssigem Zustand schichtförmig auf geeignete Substratoberflächen appliziert werden und dort nach dem Erstarren unterschiedliche Funktionen ausüben. Ihre Zusammensetzung umfasst vorzugsweise Harze, Wachse, thermoplastische Kunststoffe und Elastomere und sie können gegebenenfalls weitere Zusätze von Füllstoffen, Pigmenten und Additiven wie Stabilisatoren etc. enthalten.

Beispielsweise können Heißschmelzmassen als lösemittelfreie Klebstoffe zum Verkleben eingesetzt werden. Derartige Schmelzhaftklebstoffe werden aufgrund ihrer vielseitigen Vorteile in zunehmendem Umfang u. a. zur Herstellung von Hygiene- und Pflegeartikel, in der Papier-, Verpackungs-, Möbel-, Textil- Schuh- und Bauindustrie als wirtschaftliche und umweltfreundliche Alternative zu herkömmlichen, lösemittelbasierenden Klebstoffen eingesetzt.

Heißschmelzmassen werden weiter im Straßenbau als thermoplastische Bindemittel zur Herstellung verkehrsleitender Sichtzeichen verwendet, wie z.B. "Zebrastreifen" an Fußgängerübergängen, Mittel- oder Begrenzungslinien oder anderen signalisierenden Hinweisen zur Steuerung des Verkehrsflusses. Die dafür eingesetzten Bindemittel können neben Wachsen zusätzlich noch thermoplastische Kunststoffe, Harze sowie Weichmacher enthalten. Zur Anwendung für die Straßenmarkierung werden diese Bindemittel in der Regel mit Füllstoffen wie Sand oder Kalk, Pigmenten wie Titandioxid und lichtreflektierenden Zusätzen, z.B. Glasperlen abgemischt.
Bestandteile üblicher Schmelzkleber-Rezepturen sind polare und unpolare Polymere, Harze, sowie Wachse.
Die Klebkraft, die sich aus der nach dem Erstarren verbleibenden Haftklebrigkeit eines Schmelzhaftklebstoffes ableitet hängt einerseits von der Wechselwirkung des Klebstoffes mit dem zu beklebenden Substrat ab, d.h. von der Adhäsion zwischen Schmelzhaftklebstoff und Substrat, darüber hinaus beruht die Klebkraft aber auch auf der Kohäsion (= innere Festigkeit) des Schmelzhaftklebstoffes selbst.

Die polaren und unpolaren Polymeren des Schmelzhaftklebstoffes dienen als Gerüstsubstanz. Sie sorgen für den kohäsiven Zusammenhalt der Klebemasse und tragen gleichzeitig zur Adhäsion zum Substrat bei. Der Harzzusatz verbessert die Adhäsionswirkung und kann die Kompatibilität der verschiedenen Kleberkomponenten begünstigen. Wachse werden zur Modifizierung in Anteilen, bezogen auf die Schmelzklebermassen von in der Regel weniger als 10 Gew.-% eingesetzt. Sie regulieren wichtige physikalische Eigenschaften der Klebemassen wie etwa Härte, Schmelzviskosität und Erweichungspunkt und beeinflussen in ihrer Wirkung auf offene Zeit, Adhäsion, Kohäsion etc. entscheidend das anwendungstechnische Verhalten. Bei Wachseinsatzmengen von mehr als 10 Gew.-% wurde bisher in aller Regel eine Verschlechterung der Eigenschaften, insbesondere eine Verminderung der Klebkraft des Heißschmelzklebers gefunden.

In EP 890 584 wird die Herstellung von Propylen-Homopolymerwachsen und Propylen-Copolymerwachsen durch Polymerisation in Gegenwart von Metallocen als Katalysator und deren Verwendung unter anderem in Heißschmelzmassen beschrieben, die im wesentlichen drei Komponenten enthalten, ein Polymer, eine Klebkomponente (tackifier) und ein Wachs.

In WO 2004/104128 werden Heißschmelzmassen offenbart, enthaltend als Polyolefinwachs Copolymerwachse aus Propylen mit 0,1 bis 30 Gew.-% Ethylen und einen Anteil von 0,1 bis 50 Gew.-% eines verzweigten oder unverzweigten 1 Alkens mit 4 bis 20 C-Atomen.

In US 5,397,843 werden Heißschmelzmassen beschrieben, enthaltend hochmolekulare Ethylen-alfa-Olefin-Copolymere und niedermolekulare ataktische Poly-alfa-Olefine (APAOs).

In US 2004/0115456 und US 2004/0081795 werden Heißschmelzmassen beschrieben, enthaltend 4 bis 50 Gew.-% isotaktische Propylen-Copolymere und 20 bis 65 Gew.-% einer Klebkomponente (tackifier), beispielsweise Kohlenwasserstoffharze, natürliche und modifizierte Harze, Harzester und synthetische Polyterpene, sowie optional ataktische Poly-alfa-Olefine (APAOs), Plastifiziermittel, Wachs, Stabilisatoren, Füllmaterial und optional ein sekundäres Polymer, beispielsweise Poly(meth)acrylate etc. Die in den beiden Schriften aufgeführten Beispiele von Heißschmelzmassen enthalten isotaktische Propylencopolymere mit 1,5 bis 20 Gew.-% Ethylen oder höhere Alfa-Olefine, wobei die Copolymeren mittlere Molmassen M_{w} zwischen ca. 170 000 und 240 000 g/mol und zahlenmittlere Molmassen Mₙ zwischen ca. 60 000 und 80 000 g/mol aufweisen. Solche hochmolekularen Olefin-Polymere sind kunststoffartig, hochviskos bis fest und zeigen keine oder bloß geringe Adhäsion. Die in US 2004/0115456 und US 2004/0081795 beschriebenen Heißschmelzmassen enthalten neben isotaktischen Propylen-Copolymeren 20 bis 65 Gew.-% eines tackifiers. Der Einsatz von so großen Mengen an "tackifiern" kann aber leicht zu Korrosion, Geruchsbildung und einer Beeinträchtigung der Recyclingprozesse von mit Heißschmelzmassen ausgerüsteten Produkten führen.

Für die Qualität von Heißschmelzmassen sind geeignete Verarbeitungsviskositäten, ausreichend gute Anfangshaftung, Kohäsion, Adhäsion zu unterschiedlichen Oberflächenmaterialien, Kälte- und Wärmestabilität, aber auch ein ausreichendes Maß an Flexibilität, Zug- und Dehnbelastung, denen Verbundmaterial und Klebeverbindung bei ihrem bestimmungsgemäßen Einsatzzweck ausgesetzt sind, entscheidende Merkmale.

Aufgabe der vorliegenden Erfindung war es, neue Heißschmelzmassen bereitzustellen, die den sehr unterschiedlichen anwendungstechnischen Anforderungen an Heißschmelzmassen in Bezug auf Adhäsion, Kohäsion, Schmelzviskosität, Temperaturstabilität etc. genügen, die gleichzeitig gut formulierbar und handhabbar sind und die auf wirtschaftliche Art, d.h. kostengünstig und in großtechnischem Maßstab bereitgestellt werden können.

Völlig überraschend wurde gefunden, dass diese Aufgabe gelöst wird durch eine spezifische Kombination von isotaktischen, niedrig-molekularen, niedrig-viskosen Homo-Polymer- oder Copolymerwachsen mit ataktischen Poly-alfa-Olefinen (APAOs).

Mischungen von ataktischen Poly-alfa-Olefinen (APAOs), die einen Anteil an APAOs von 60 Gew.-% und mehr aufweisen, mit isotaktischen niedrig-molekularen, niedrig-viskosen Homo-Polymer- oder Copolymerwachsen besitzen eine Viskosität im Bereich von 500 bis 10 000 mPa·s, bevorzugt zwischen 1000 und 5000 mPa·s, gemessen bei einer Temperatur von 170°C, lassen sich leicht auf Oberflächen auftragen und zeigen eine sehr gute Kohäsion.

Gegenstand der vorliegenden Erfindung sind Heißschmelzmassen enthaltend
a) 0,1 bis 40 Gew.-%, bevorzugt 5 bis 35 Gew.-%, besonders bevorzugt 10 bis 30 Gew.-% und außerordentlich bevorzugt 20 bis 25 Gew.-%, eines oder mehrerer isotaktischer Homo- und/oder Copolymerwachse aus den Monomeren Ethylen und/oder Propylen und/oder höhere lineare oder verzweigte alpha-Olefine mit 4 bis 20 C-Atomen, wobei das oder die Copolymerwachs/e, bezogen auf das Gesamtgewicht des oder der Copolymenrvachse, noch zusätzlich 0,1 bis 30 Gew.-% an Struktureinheiten enthalten, die aus dem einen Monomer und 70 bis 99,9 Gew.-% an Struktureinheiten aus dem oder den anderen Monomeren hervorgegangen sind, wobei das oder die Homo- und Copolymerwachs/e ein gewichtsmittleres Molekulargewicht M_{w} von kleiner/gleich 40 000 g/mol besitzen und durch Polymerisation in Gegenwart von Metallocen als Katalysator erhalten worden sind, einen Tropf- oder Erweichungspunkt Ring/Kugel zwischen 80 und 165°C haben, eine Schmelzviskosität, gemessen bei einer Temperatur von 170°C, zwischen 20 und 40 000 mPa·s besitzen und eine Glasübergangstemperatur T_{g} von maximal -20°C aufweisen, und
b) mindestens 60 Gew.-% oder mehr, bevorzugt 62 bis 90 Gew.-%, besonders bevorzugt 65 bis 85 Gew.-% und außerordentlich bevorzugt 70 bis 80 Gew.-%, eines oder mehrerer amorpher, ataktischer Poly-alpha-Olefine (APAOs).

Ein bevorzugter Gegenstand der Erfindung sind Heißschmelzmassen enthaltend
a) ein oder mehrere isotaktische Homo- und/oder Copolymerwachse aus den Monomeren Ethylen und/oder Propylen wobei die Copolymerwachse, bezogen auf das Gesamtgewicht der Copolymerwachse 0,1 bis 30 Gew.-% an Struktureinheiten hervorgegangen aus dem einen Monomer und 70 bis 99,9 Gew.-% an Struktureinheiten aus dem anderen Monomer enthalten, wobei die Homo- und Copolymerwachse ein gewichtsmittleres Molekulargewicht M_{w} von kleiner/gleich 40 000 g/mol besitzen und durch Polymerisation in Gegenwart von Metallocen als Katalysator erhalten worden sind, einen Tropf- oder Erweichungspunkt Ring/Kugel zwischen 80 und 165°C haben, eine Schmelzviskosität, gemessen bei einer Temperatur von 170°C, zwischen 20 und 40 000 mPa·s besitzen und eine Glasübergangstemperatur T_{g} von maximal -20°C aufweisen und
b) ein oder mehrere amorphe/s, ataktische/s Poly-alpha-Olefin/e (APAOs) in den oben angegebenen Gewichtsmengen.

Weiter erfindungsgemäß bevorzugte Heißschmelzmassen enthalten
a) ein oder mehrere isotaktische Propylen-Homopolymerwachse- und/oder Propylen-Copolymerwachse, wobei die Propylencopolymerwachse, bezogen auf das Gesamtgewicht der Copolymerwachse, 0,1 bis 30 Gew.-% an Struktureinheiten enthalten, die aus Ethylen und 70 bis 99,9 Gew.-% an Struktureinheiten aus Propylen hervorgegangen sind, und wobei die Homo- und Copolymerwachse ein gewichtsmittleres Molekulargewicht M_{w} von kleiner als 40 000 g/mol besitzen,
b) ein oder mehrere amorphe/s, ataktische/s Poly-alpha-Olefin/e (APAOs) in den oben angegebenen Gewichtsmengen.

In einer weiteren bevorzugten Ausführungsform der Erfindung sind die in den Heißschmelzmassen enthaltenen Copolymerwachse hervorgegangen aus Ethylen und mindestens einem verzweigten oder unverzweigten 1-Alken mit 3 bis 20 C-Atomen, wobei die Menge an Struktureinheiten aus dem einen oder den mehreren 1-Alkenen mit 3 bis 20 C-Atomen in den Copolymerwachsen von 0,1 bis 30 Gew.-% beträgt.

Weiter erfindungsgemäß bevorzugte Heißschmelzmassen enthalten
a) ein oder mehrere isotaktische Ethylen-Homopolymerwachse- und/oder Ethylen-Copolymerwachse, wobei die Ethylen-Copolymerwachse, bezogen auf das Gesamtgewicht der Copolymerwachse 70 bis 99,9 Gew.-% an Struktureinheiten hervorgegangen aus Ethylen und 0,1 bis 30,0 Gew.-% an Struktureinheiten aus Propylen enthalten und wobei die Homo- und Copolymerwachse ein gewichtsmittleres Molekulargewicht M_{w} von kleiner als 40 000 g/mol besitzen und
b) ein oder mehrere amorphe/s, ataktische/s Poly-alpha-Olefin/e (APAOs) in den oben angegebenen Gewichtsmengen.

In einer weiteren bevorzugten Ausführungsform der Erfindung sind die in den Heißschmelzmassen enthaltenen Polyolefinwachse Copolymerwachse aus Propylen und einem oder mehreren weiteren Monomeren ausgewählt aus Ethylen und verzweigten oder unverzweigten 1-Alkenen mit 4 bis 20 C-Atomen, wobei der Gehalt an Struktureinheiten hervorgegangen aus Ethylen in den Copolymerwachsen von 0,1 bis 30 Gew.-% und der Gehalt an Struktureinheiten hervorgegangen aus dem einen oder den mehreren 1-Alkenen mit 4 bis 20 C-Atomen in den Copolymerwachsen von 0,1 bis 50 Gew.-% beträgt.

Weiter bevorzugte erfindungsgemäße Heißschmelzmassen enthaltenen Homo- und/oder Copolymerwachse, die eine zahlenmittlere Molmasse Mₙ zwischen 500 und 20 000 g/mol, besonders bevorzugt zwischen 800 und 10 000 g/mol und insbesondere bevorzugt zwischen 1000 und 5000 g/mol, und eine gewichtsmittlere Molmasse M_{w} zwischen 1000 und 40 000 g/mol, besonders bevorzugt zwischen 1600 und 30 000 g/mol und insbesondere bevorzugt zwischen 2000 und 25000 g/mol aufweisen.

In einer bevorzugten Ausführungsform enthalten die erfindungsgemäßen Heißschmelzmassen
a) 0,1 bis 39 Gew.-%, bevorzugt 5 bis 35 Gew.-%, besonders bevorzugt 10 bis 30 Gew.-% und außerordentlich bevorzugt 20 bis 25 Gew.-%, eines oder mehrerer isotaktischer Homo- und/oder Copolymerwachse/s aus den Monomeren Ethylen und/oder Propylen und/oder höherer linearer oder verzweigter alpha-Olefine mit 4 bis 20 C-Atomen, wobei das oder die Copolymerwachse, bezogen auf das Gesamtgewicht der Copolymerwachse 0,1 bis 30 Gew.-% an Struktureinheiten enthalten, die aus dem einen Monomer hervorgegangen sind, und 70 bis 99,9 Gew.-% an Struktureinheiten aus dem oder den anderen Monomeren und wobei das oder die Homo- und Copolymerwachse ein gewichtsmittleres Molekulargewicht M_{w} von kleiner/gleich 40 000 g/mol besitzen und durch Polymerisation in Gegenwart von Metallocen als Katalysator erhalten worden sind, einen Tropf- oder Erweichungspunkt Ring/Kugel zwischen 80 und 165°C haben, eine Schmelzviskosität, gemessen bei einer Temperatur von 170°C, zwischen 20 und 40000 mPa·s besitzen und eine Glasübergangstemperatur T_{g} von maximal -10 °C aufweisen und
b) 61 bis 95 Gew.- %, bevorzugt 62 bis 90 Gew.-%, besonders bevorzugt 65 bis 85 Gew.-% und außerordentlich bevorzugt 70 bis 80 Gew.-%, eines oder mehrerer amorpher, ataktischer Poly-alpha-Olefins/e (APAOs) und
c) 0,1 bis 19,9 Gew.-%, bevorzugt 2 bis 15 Gew.-%, besonders bevorzugt 5 bis 12 Gew.-% und außerordentlich bevorzugt 8 bis 10 Gew.-%, eines Harzes.

Die erfindungsgemäß in Heißschmelzmassen eingesetzten ataktischen Poly-alpha-Olefine (APAOs) sind überwiegend amorph und haben eine Kristallinität von weniger als 30 %, bestimmt nach DSC (differential scanning calorimetry). Die eingesetzten APAOs können Homopolymere von Propylen oder Copolymere von Propylen mit einem oder mehreren alpha-Olefinen, beispielsweise Ethylen, 1-Buten, 1-Propen, 1-Hexen, 1-Hepten oder 1-Octen sein. Die gewichtsmittleren Molmasse M_{w} der eingesetzten APAOs liegt im Bereich von 4 000 bis 150 000 g/mol, bevorzugt zwischen 10 000 und 100 000 g/mol. Ihre Erweichungspunkte liegen zwischen 80 und 170°C, ihre Glasübergangstemperaturen T_{g} zwischen -5 und -40°C.

Unter den APAOs bevorzugt eingesetzt werden Propylen-Homopolymere, Propylen-Ethylen-Copolymere, Propylen-1-Buten-Copolymere und Propylen-Ethylen-1-Buten-Terpolymere. APAO-Polymere sind erhältlich unter den Handelsnamen ^{®}Eastoflex der Eastman Chemical Company, unter den Handelnamen ^{®}Rextac der Huntsman Corporation oder unter dem Handelsnamen ^{®}Vestoplast der Degussa Corporation.

Als Harze stehen zur Verfügung aliphatische und cycloaliphatische Kohlenwasserstoffe mit Erweichungspunkten von 10 bis 160°C, bestimmt nach der ASTM Methode E28-58T. Diese können durch Polymerisation von aliphatischen und/oder cycloaliphatischen Olefinen und Diolefinen hergestellt werden. Ebenso in Betracht kommen hydrierte aliphatische und cycloaliphatische Kohlenwasserstoffe aus Mineralöl, beispielsweise die von Eastman Chemical Company unter den Handelsnamen Eastoflex, RegalREZ, Kristalex, Eastotac, Piccotac erhältlichen Produkte oder von ExxonMobil Chemical Company unter der Bezeichnung ^{®}Escoreze erhältlichen Harze.

In Betracht kommen ebenfalls aromatische Kohlenwasserstoffe aus Erdöl und deren hydrierte Derivate, ebenso aliphatisch/aromatische Kohlenwasserstoffe aus Erdöl und deren hydrierte oder säurefunktionalisierte Derivate, aromatisch modifizierte cycloaliphatische Harze und deren hydrierte Derivate, Polyterpen-Harze mit Erweichungspunkten zwischen 110 und 140 °C, die durch Polymerisation von Terpenen, beispielsweise Pinen in Gegenwart eines Friedel-Crafts Katalysators hergestellt werden, hydrierte Polyterpene, Copolymere und Terpolymere von natürlichen Terpenen, beispielsweise Styrol/Terpene, a-Methylstyrol/Terpen und Vinyltoluol/Terpen. Weiter in Betracht kommen natürliche und modifizierte Kolophoniumharze, insbesondere Harzester, Glycerinester von Baumharzen, Pentaerithrolester von Baumharzen und Tallölharzen und deren hydrierte Derivate, sowie phenol-modifizierte Pentaerithroester von Harzen und phenol-modifizierte Terpen-Harze.

Die erfindungsgemäßen Heißschmelzmassen können zusätzlich Polyolefin-Kunststoffe, Wachse, Weichmacher, polare oder unpolare Polymere, Pigmente, Füllstoffe, Stabilisatoren und/oder Antioxidantien enthalten.

Für die Herstellung der erfindungsgemäß verwendeten Polyolefinwachse werden Metallocenverbindungen der Formel I eingesetzt.

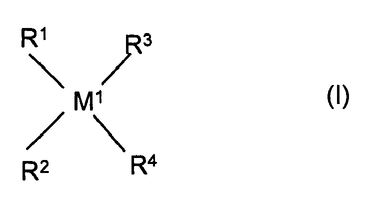

Diese Formel umfasst auch Verbindungen der Formel la, 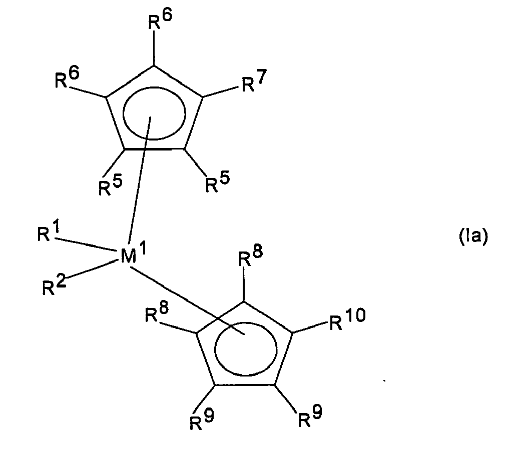 der Formel Ib 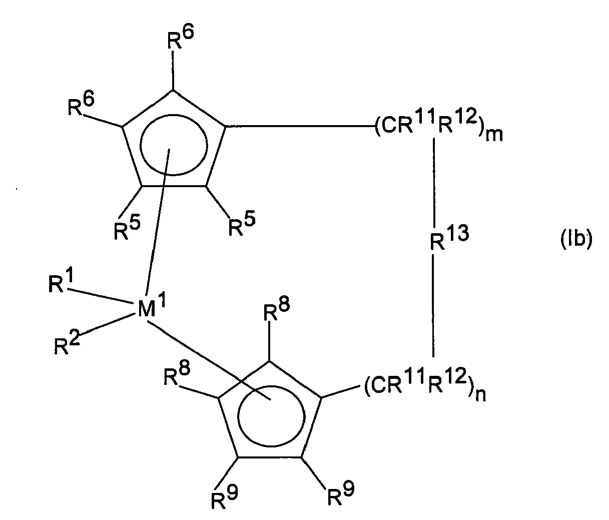 und der Formel Ic

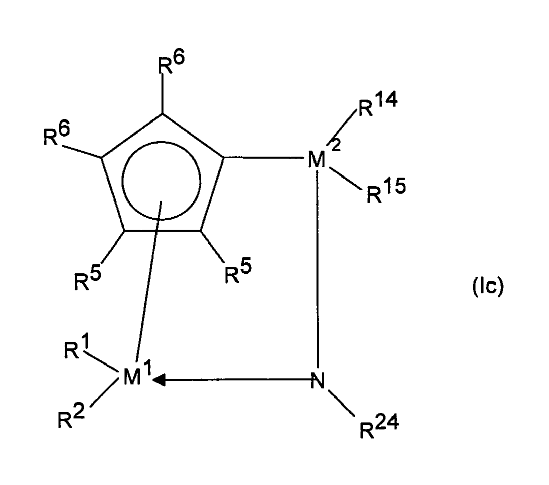

In den Formeln I, Ia und Ib ist M¹ ein Metall der Gruppe IVb, Vb oder VIb des Periodensystems, beispielsweise Titan, Zirkonium, Hafnium, Vanadium, Niob, Tantal, Chrom, Molybdän, Wolfram, vorzugsweise Titan, Zirkonium, Hafnium.

R¹ und R² sind gleich oder verschieden und bedeuten ein Wasserstoffatom, eine C₁-C₁₀-, vorzugsweise C₁-C₃-Alkylgruppe, insbesondere Methyl, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 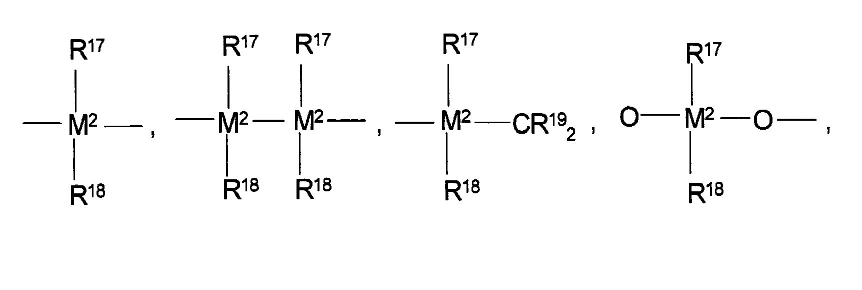 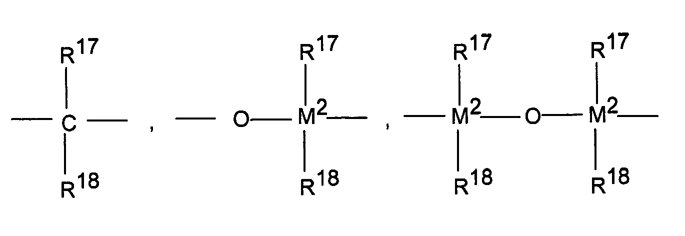 =BR¹⁷,=AIR¹⁷, -Ge-, -Sn-, -O-, -S-, =SO, =SO₂, =NR¹⁷ =CO, =PR¹⁷ oder =P(O)R¹⁷ wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀-, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
   sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹_{4'} R²⁰₃CBR²¹₄ oder BR²¹₃. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bistrifluormethylphenyl, Mesityl, Xylyl oder Tolyl.

Zusätzlich ist häufig eine dritte Komponente erforderlich, um einen Schutz von polaren Katalysator-Giften aufrecht zu erhalten. Hierzu sind aluminiumorganische Verbindung wie z.B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Weiterer Gegenstand der Erfindung ist die Verwendung der erfindungsgemäßen Heißschmelzmassen als Schmelzkleber.

Weitere mögliche Bestandteile sind Harze, Wachse und unpolare oder polare Polymere wie z.B. Ethylen-Vinylacetat-Copolymere, Polyacrylate, Polyester, Polyether, Polycarbonate, Polyacetale, Polyurethane, Polyolefine, Kautschukpolymere, wie Nitril- oder Styrol/Butadiene Kautschuke.

Polyisobutylen, Styrol-Butadien-Styrol-Blockpolymere oder Styrol-Isopren-Styrol-Blockpolymere, für besonders hoch beanspruchte Verklebungen auch Polyamide oder Polyester. Als Harzkomponenten können z.B. Kolophoniumharze und deren Derivate oder Kohlenwasserstoffharze enthalten sein, als Wachse Kohlenwasserstoffwachse wie Fischer-Tropsch-Paraffine, nicht mit Metallocenkatalysatoren hergestellte Polyolefinwachse, wobei diese unpolar oder polar modifiziert, z.B. oxidiert oder mit polaren Monomeren wie Maleinsäureanhydrid gepfropft, sein können. Die Schmelzklebermassen können zusätzlich Füllstoffe oder Hilfsstoffe wie Weichmacher, Pigmente und Stabilisatoren wie Antioxidantien oder Lichtschutzmittel enthalten.

Die nachfolgenden Ausführungsbeispiele sollen dem Fachmann die Erfindung näher erläutern, ohne jedoch als Beschränkung auf die konkret dargestellten Ausführungsformen verstanden zu werden.

Im Rahmen der Ausführungsbeispiele wurden die Schmelzviskositäten nach DIN 53019 mit einem Rotationsviskosimeter, die Tropfpunkte nach DIN 51801/2, die Erweichungspunkte Ring/Kugel nach DIN EN 1427 und die Glasübergangstemperaturen T_{g} mit Hilfe der Differentialthermoanalyse nach DIN 51700 bestimmt. Das Molmassengewichtsmittel M_{w}, das Molmassenzahlenmittel Mₙ und der resultierende Quotient M_{w}/Mₙ wurden durch Gelpermeationschromatographie bei 135 °C in 1,2-Dichlorbenzol ermittelt.

### Ausführungsbeispiele

Die erfindungsgemäß eingesetzten, in Tabelle 1 aufgeführten Metallocen-Polyolefinwachse 1, 2 und 3 wurden durch Copolymerisation von Propylen mit Ethylen in Gegenwart des Metallocens Dimethylsilylbisindenylzirkoniumdichlorid als Katalysator nach dem in EP-A-0 384 264 angegebenen Verfahren (allg. Vorschrift Beispiele 1 bis 16) hergestellt. Der Gewichtsanteil der Monomeren ist der Tabelle 1 zu entnehmen. Die unterschiedlichen Erweichungspunkte und Viskositäten wurden durch Variation des Ethyleneinsatzes und der Polymerisationstemperatur eingestellt.

**Tabelle 1: Zusammensetzung der Polyolefinwachse**

| Polyolefinwachs | Ethylen [Gew.-%] | Propylen [Gew.-%] |
|---|---|---|
| 1 | 95 | 5 |
| 2 | 90 | 10 |
| 3 | 91 | 9 |

**Tabelle 2: Erweichungs-/Tropfpunkt, Viskosität, gewichtsmittlere Molekulargewichte und Dichte der Polyolefinwachse**

| | Produkttyp | Erweichungs-/ Tropfpunkt (°C) | Viskosität bei 170°C [mPa·s] | gewichtsmittleres Molekulargewicht M_{w} [g/mol] | Dichte [g/cm³] [g/cm³] |
|---|---|---|---|---|---|
| | | | | | |
| 1 | Propylen-Ethylen Copolymerwachs (Metallocene) | 125* | 120 | 4500 | 0.89 |
| 2 | Propylen-Ethylen Copolymerwachs (Metallocene) | 90^{*} | 400 | 6890 | 0.88 |
| 3 | Propylen-Ethylen Copolymerwachs (Metallocene) | 92** | 1600 | 13300 | 0.88 |

| | | | | | |
|---|---|---|---|---|---|
| ^{*}) Tropfpunkt ^{**}) Erweichungspunkt | | | | | |

### Anwendungstechnische Prüfergebnisse:

**Tabelle 3: Schmelzviskositäten und Kohäsionen im Vergleich zu den Einzelkomponenten**

| 1 | 2 | 3 | Vestoplast 703 | Kohäsion [N/mm²] | Viskosität bei 170°C [mPa·s] |
|---|---|---|---|---|---|
| 100 Gew.-% | | | | ^{*}1,0 | |
| 5 Gew.-% | | | 95 Gew.-% | 2 | |
| 20 Gew.-% | | | 80 Gew.-% | 4,6 | 2130 |
| | 100 Gew.-% | | | * Nicht messbar | |
| | 5 Gew.-% | | 95 Gew.-% | 2 | |
| | | 100 Gew.-% | | * 1,1 | 2000 |
| | | 5 Gew.-% | 95 Gew.-% | 2 | |

| | | | | | |
|---|---|---|---|---|---|
| ^{*} = Vergleichsversuch | | | | | |

Die in Tabelle 3 aufgeführten Schmelzklebermassen wurden hergestellt aus den in Tabelle 1 angegebenen Copolymerwachsen 1, 2 und 3 und den unter dem Handelsnamen Vestoplast 703 (Degussa) erhältlichen, ataktischen alpha-Olefinen (APAOs) mit dem Mischungsverhältnissen 80 Gew.-% bzw. 95 Gew.-% APAO und 20 Gew.-% bzw. 5 Gew.-% Homo- bzw. Copolymerwachsen. Die Komponenten wurden gemeinsam aufgeschmolzen und über eine Zeitdauer von 1 h bei 180°C gerührt.

Die Schmelzviskositäten der Schmelzklebermassen bei 170°C wurden nach DIN 53019 mit einem Rotationsviskosimeter bestimmt, die Kohäsionen wurden bestimmt gemäß DIN 53455, indem Formkörper vergossen und deren mechanische Stabilität im Zugversuch geprüft wurde.

Die Beispiele zeigen, dass durch Zugabe von Homo- oder Copolymerwachsen von 5 Gew.-% und insbesondere von 20 Gew.-% eine deutliche Verbesserung der Kohäsion erreicht wird.

## Patentansprüche

1. Heißschmelzmassen, **dadurch gekennzeichnet, dass** sie enthalten
a) 0,1 bis 40 Gew.-% eines oder mehrerer isotaktischer Homo- und/oder Copolymerwachse/s aus den Monomeren Ethylen und/oder Propylen und/oder höherer linearer oder verzweigter alpha-Olefine mit 4 bis 20 C-Atomen, wobei das oder die Copolymerwachs/e, bezogen auf das Gesamtgewicht des oder der Copolymerwachs/e, 0,1 bis 30 Gew.-% an Struktureinheiten enthalten, die hervorgegangen sind aus dem einen Monomer und 70 bis 99,9 Gew.-% an Struktureinheiten aus dem oder den anderen Monomeren, und wobei das oder die Homo- und Copolymerwachs/e ein gewichtsmittleres Molekulargewicht M_{w} von kleiner/gleich 40 000 g/mol besitzen und durch Polymerisation der Monomeren in Gegenwart von Metallocen als Katalysator erhalten worden sind, einen Tropf- oder Erweichungspunkt Ring/Kugel zwischen 80 und 165°C haben, eine Schmelzviskosität, gemessen bei einer Temperatur von 170°C, zwischen 20 und 40 000 mPa·s besitzen und eine Glasübergangstemperatur T_{g} von maximal -20 °C aufweisen und
b) mindestens 60 Gew.-%, eines oder mehrerer amorpher, ataktischer Poly-alpha-Olefins/e (APAOs).

2. Heißschmelzmassen gemäß Anspruch 1, **dadurch gekennzeichnet, dass** sie
a) ein oder mehrere isotaktische Homo- und/ oder Copolymerwachse aus den Monomeren Ethylen und/oder Propylen enthalten und
b) ein oder mehrere amorphe/s, ataktische/s Poly-alpha-Olefin/e.

3. Heißschmelzmassen gemäß Anspruch 1 oder 2, **dadurch gekennzeichnet, dass** sie
a) ein oder mehrere isotaktische Propylen-Homopolymerwachse- und/oder Propylen-Copolymerwachse enthalten und
b) ein oder mehrere amorphe/s, ataktische/s Poly-alpha-Olefin/e.

4. Heißschmelzmassen gemäß Anspruch 1 oder 2, **dadurch gekennzeichnet, dass** sie
Olefinhomo- oder -copolymerwachse enthalten, hervorgegangen aus Ethylen und mindestens einem verzweigten oder unverzweigten 1-Alken mit 3 bis 20 C-Atomen, wobei die Menge an Struktureinheiten aus dem einen oder den mehreren 1-Alkenen mit 3 bis 20 C-Atomen in den Copolymerwachsen von 0,1 bis 30 Gew.-% beträgt.

5. Heißschmelzmassen gemäß einem oder mehreren der Ansprüche 1 bis 4, **dadurch gekennzeichnet, dass** die in den Heißschmelzmassen enthaltenen Homo- und/oder Copolymerwachse, eine zahlenmittlere Molmasse Mₙ zwischen 500 und 20 000 g/mol, bevorzugt zwischen 800 und 10 000 g/mol und besonders bevorzugt zwischen 1000 und 5000 g/mol, und eine gewichtsmittlere Molmasse M_{w} zwischen 1000 und 40 000 g/mol, bevorzugt zwischen 1600 und 30 000 g/mol und besonders bevorzugt zwischen 2000 und 25000 g/mol, aufweisen.

6. Heißschmelzmassen gemäß einem oder mehreren der Ansprüche 1 bis 5, **dadurch gekennzeichnet, dass** sie zusätzlich 0,1 bis 19,9 Gew.-%, bevorzugt 2 bis 15 Gew.-%, besonders bevorzugt 5 bis 12 Gew.-%, eines Harzes enthalten.

7. Heißschmelzmassen nach einem oder nach mehreren der Ansprüche 1 bis 6, **dadurch gekennzeichnet, dass** sie als Harze Kolophoniumharze und deren Derivate oder Kohlenwasserstoffharze enthalten.

8. Verwendung der erfindungsgemäßen Heißschmelzmassen als Schmelzkleber.
